# FASCICULE DE BREVET EUROPEEN

(11) **EP 2 881 897 B1**
(45) Date de publication et mention de la délivrance du brevet: **08.05.2019**
(21) Numéro de dépôt: 14196883.4
(22) Date de dépôt: 09.12.2014
(51) Int. Cl.: G06K 19/073

(54) **Dispositif de protection contre une utilisation non autorisée d'un système électronique comprenant une antenne.**
Schutzvorrichtung mit Antenne gegen eine nicht-autorisierte Verwendung eines elektronischen Systems
Device for protection against unauthorised use of an electronic system comprising an antenna

(30) Priorité: 09.12.2013 FR 1362307
(43) Date de publication de la demande: 10.06.2015
(73) Titulaire: IDEMIA France, 92700 Colombes (FR)
(72) Inventeur: Launay, François, 92700 Colombes (FR)
(74) Mandataire: Delumeau, François Guy

(56) Documents cités:
- EP-A1- 1 445 730
- EP-A2- 1 030 266
- DE-A1-102005 061 249
- JP-A- 2008 071 120
- US-A1- 2004 012 496

## Description

La présente invention concerne un dispositif de protection contre une utilisation non autorisée d'un système électronique du type comprenant une antenne.

Les systèmes électroniques du type comprenant une antenne se généralisent aujourd'hui. Au moyen de cette antenne un tel système électronique est apte à dialoguer avec un lecteur/transmetteur homologue, comprenant lui aussi une antenne associée. Une telle interface au moyen d'antennes est avantageuse en ce qu'elle permet d'établir une liaison entre un système électronique et un lecteur/transmetteur, apte à permettre d'échanger des données et cela sans contact. Ainsi un tel système électronique n'a avantageusement plus besoin d'être placé au contact du lecteur/transmetteur et selon une position et/ou une orientation précise. Une liaison peut avantageusement être établie, à distance et ainsi même à la volée, tant que le système électronique reste dans la portée du lecteur/transmetteur.

Un tel système électronique peut être un transpondeur RFID, un dispositif de télépéage, un support équipé d'une interface NFC, ou encore une carte à microcircuit du type sans contact.

Une telle carte à microcircuit comprend une antenne afin de recevoir son alimentation électrique par induction et afin de communiquer avec un lecteur/transmetteur adapté. Une telle carte à microcircuit est de plus en plus utilisée de nos jours comme document d'identité, carte d'assuré social, dossier médical, carte téléphonique, carte bancaire ou encore carte de fidélité commerciale. A ce titre elle comprend des données confidentielles qui doivent être protégées.

Le mode même d'établissement d'une telle liaison sans contact souffre des inconvénients de ses avantages. En effet le mode de communication sans contact laisse la place à un piratage, encore connu sous le nom de « vol à la tire électronique ». Dans la mise en oeuvre de ce piratage, un lecteur pirate, reproduisant au moins certaines caractéristiques d'un lecteur/transmetteur autorisé, accoste un système électronique et dialogue avec lui pour obtenir des informations qui devraient rester confidentielles.

Ceci est rendu possible par la portée qui permet une approche discrète, depuis une certaine distance, lorsque le système électronique est laissé sans surveillance, mais aussi dans des situations où le système électronique semble protégé. Des exemples de telles situations sont : le système électronique est porté par son utilisateur, visible sur un porte badge, invisible dans une poche ou dans un portefeuille, le système électronique est rangé invisible dans un meuble, tiroir, coffre attaché-case, y compris fermé à clé, le système électronique est dans un véhicule automobile, inaccessible mais visible derrière une vitre, dans une vitrine, etc.

Si un lecteur pirate peut être approché dans la portée du système électronique, un potentiel piratage est à craindre. Aussi convient-il de proposer un dispositif de protection permettant à un utilisateur de donner son accord à l'établissement d'une liaison et/ou avant toute transaction.

Il est connu, pour inhiber le fonctionnement d'un système électronique comprenant une antenne, de sélectivement couper une spire de l'antenne. Ainsi un interrupteur disposé en série sur une spire de l'antenne permet sélectivement, lorsqu'il est fermé, d'avoir une antenne continue et opérationnelle rendant le système opérationnel et, lorsqu'il est ouvert, une antenne ouverte inhibant le système.

Cependant, en fonction de la technologie utilisée pour réaliser ledit interrupteur, il peut n'être possible de réaliser qu'une seule logique de commande parmi inhibé par défaut ou autorisé/opérationnel par défaut. Aussi est-il souhaitable de proposer un moyen d'inhibition du système électronique alternatif et permettant de réaliser l'autre logique de commande.

Il est encore connu d'équiper un système électronique d'un interrupteur, par exemple mécanique ou du moins sensible à une pression exercée par un appui, par exemple digital. Un tel appui, typiquement réalisé par le propriétaire du système électronique, autorise ainsi le fonctionnement du système. Un tel interrupteur présente les inconvénients suivants. Si l'interrupteur est bistable, un premier appui rend le système opérationnel et un deuxième appui est nécessaire pour l'inhiber à nouveau, et ainsi le sécuriser, après utilisation, à l'issue d'une transaction. Il existe un risque important d'oublier le deuxième appui. Si au contraire l'interrupteur est monostable, un appui maintenu est nécessaire pour rendre le système opérationnel. Un tel maintien doit être réalisé pendant toute la durée de la transaction, ce qui peut s'avérer malcommode.

Il est encore connu, afin de se prémunir d'un piratage lorsque le système électronique est rangé et invisible, d'équiper un système électronique d'un interrupteur photosensible. Une exposition à la lumière est nécessaire pour autoriser le fonctionnement du système et le rendre opérationnel. Ainsi un tel système électronique est protégé contre le piratage dans les configurations où il est caché : poche, portefeuille, tiroir opaque, etc. Une telle caractéristique présente l'inconvénient de ne pas de protéger un système électronique lorsqu'il est éclairé : porté apparent dans un porte badge, posé sur la planche de bord ou la plage arrière d'un véhicule automobile, etc.

La présente invention remédie à ces différents inconvénients.

L'invention a pour objet un dispositif selon la revendication 1.

Selon une autre caractéristique, le premier interrupteur est normalement fermé et comprend un moyen de manoeuvre permettant de l'ouvrir.

Selon une autre caractéristique, le premier interrupteur est photosensible et est ouvert lorsque éclairé.

EP 1030266 divulgue une carte à circuit intégré sans contact comprenant une bobine et un interrupteur.

JP 2008071120 divulgue une antenne comprenant un moyen de déconnexion en série.

DE 102005061249 divulgue une antenne comprenant un interrupteur en court-circuit.

Selon une caractéristique alternative, le premier interrupteur est photosensible et est ouvert lorsque non éclairé.

Selon une autre caractéristique, l'élément photosensible du premier interrupteur présente une taille suffisamment réduite pour pouvoir être couvert par un moyen de masquage, sensiblement de la taille d'un doigt.

Selon une autre caractéristique, le deuxième interrupteur est photosensible et apte à inhiber le fonctionnement du système électronique lorsque le deuxième interrupteur n'est pas éclairé.

Selon une caractéristique alternative, le deuxième interrupteur est photosensible et apte à inhiber le fonctionnement du système électronique lorsque le deuxième interrupteur est éclairé.

Selon une autre caractéristique, l'élément photosensible du deuxième interrupteur présente une taille suffisamment réduite pour pouvoir être couvert par un moyen de masquage, sensiblement de la taille d'un doigt.

Selon une autre caractéristique, le deuxième interrupteur est disposé en court-circuit entre au moins deux spires de l'antenne.

Selon une autre caractéristique, le deuxième interrupteur est disposé en série dans une spire de l'antenne.

Selon une autre caractéristique, l'élément sensible du premier interrupteur et/ou l'élément sensible du deuxième interrupteur comprend un matériau photo conducteur organique.

Selon une autre caractéristique, l'élément sensible du premier interrupteur et/ou l'élément sensible du deuxième interrupteur est recouvert d'une fenêtre translucide.

L'invention concerne encore un système électronique comprenant une antenne comprenant un tel dispositif de protection.

Selon une autre caractéristique, le système électronique est une carte à microcircuit.

Avantageusement, la carte à microcircuit est définie selon la norme ISO 7816.
L'invention concerne encore un procédé selon la revendication 14.

L'invention concerne encore l'utilisation d'un lecteur/transmetteur selon la revendication 15. L'invention concerne encore un système selon la revendication 16.

D'autres caractéristiques, détails et avantages de l'invention ressortiront plus clairement de la description détaillée donnée ci-après à titre indicatif en relation avec des dessins sur lesquels :
- la figure 1 illustre un système électronique équipé d'un interrupteur « court-circuit »,
- la figure 2 est un schéma électrique équivalent d'un interrupteur « court-circuit » à manoeuvre manuelle,
- les figures 3 et 4 sont des schémas électriques équivalent d'un interrupteur « court-circuit » photosensible selon un premier mode de réalisation,
- la figure 5 est un schéma électrique équivalent d'un interrupteur « court-circuit » photosensible selon un exemple utile à la compréhension de l'invention,
- la figure 6 illustre un système électronique équipé d'un interrupteur « série »,
- la figure 7 est un schéma électrique équivalent d'un interrupteur « série » photosensible selon un exemple utile à la compréhension de l'invention,
- la figure 8 est un schéma électrique équivalent d'un interrupteur « série » photosensible selon un exemple utile à la compréhension de l'invention,
- la figure 9 illustre un système électronique équipé de deux interrupteurs,
- la figure 10 illustre un système électronique équipé de fenêtres translucides,
- la figure 11 illustre un système électronique équipé de deux interrupteurs de logiques inverses et son utilisation,
- la figure 12 illustre un exemple utile à la compréhension de l'invention d'un interrupteur « court-circuit » photosensible,
- la figure 13 illustre un mode de réalisation d'un interrupteur « série » photosensible,
- les figures 14-17 illustrent quatre combinaisons de deux interrupteurs de logiques inverses.

Un dispositif de protection selon l'invention peut être mis en oeuvre sur tout système électronique 1 comprenant une antenne 4. Un tel système électronique 1 peut être un transpondeur RFID, un dispositif de télépéage, un support équipé d'une interface NFC, ou encore une carte à microcircuit du type sans contact.

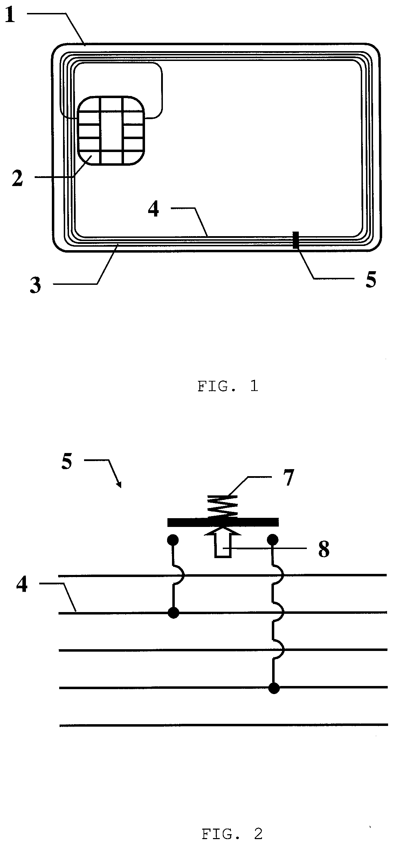

La figure 1 présente, à titre illustratif, une carte à microcircuit 1. Une telle carte comprend un module 2 comprenant un microcircuit. Le microcircuit est interfacé à une antenne 3, typiquement composée d'un enroulement de spires 4. Une telle carte à microcircuit 1 peut être une carte dite « sans contact » apte à établir une liaison uniquement via son antenne 3 ou une carte dite « duale » apte à établir une liaison via son antenne 3 ou via une interface de contact. L'antenne 3 est utilisée pour dialoguer avec l'extérieur et établir une liaison permettant des échanges de données entre des données stockées dans une mémoire du microcircuit et un lecteur/transmetteur apte à établir une liaison avec le système électronique 1. Une session comprenant l'établissement d'une liaison, la réalisation d'un ou plusieurs échanges de données et la terminaison de la liaison est appelée une transaction.

Une protection contre le piratage, tel qu'expliqué précédemment, nécessite de pouvoir interdire la réalisation d'une transaction en l'absence d'autorisation du propriétaire du système électronique 1. Pour cela il convient de pouvoir disposer d'un moyen apte à inhiber le fonctionnement du système électronique 1.

Selon une première caractéristique de l'invention, illustrée à la figure 1, un tel moyen d'inhibition peut avantageusement être réalisé par un interrupteur agissant sur l'antenne 3 en ce qu'il réalise sélectivement un court-circuit entre au moins deux spires 4 de l'antenne 3. Ainsi lorsque l'interrupteur 5 est fermé et réalise un tel court-circuit, la longueur effective de l'antenne 3 est modifiée, modifiant ainsi son impédance et ce de manière suffisante pour que l'antenne 3 ne soit plus accordée. Il n'est alors plus possible, au travers de ladite antenne 3, d'établir une liaison. Le système électronique 1 est alors incapable de dialoguer avec l'extérieur et se trouve de fait inhibé et incapable de réaliser une transaction. Au contraire lorsque l'interrupteur 5 est ouvert, aucun court-circuit n'est réalisé, l'antenne 3 retrouve son état nominal et est apte à assurer ses fonctions et à permettre d'établir une liaison.

Dans le cas de système électronique 1 sans alimentation électrique embarquée, tel un transpondeur RFID ou une carte à microcircuit, l'alimentation électrique est apportée par le lecteur par induction magnétique. L'antenne 3 sert alors, et en premier, de récepteur d'alimentation électrique afin de réveiller le microcircuit et ensuite pouvoir établir une liaison. En cas de désaccord de l'antenne 3 cette première fonction de l'antenne 3 ne peut pas être assurée et le microcircuit n'est pas réveillé. Le système électronique 1 est alors expressément et doublement inhibé.

Les figures 2-5, 7-8 représentent des exemples utiles à la compréhension de l'invention, et 14-17 représentent des schémas électriques équivalents correspondant à différents modes de réalisation. Ils sont indicatifs de la logique et de la fonction des interrupteurs. Ils ne présupposent aucunement des moyens et des technologies employés pour réaliser les interrupteurs.

Tel qu'illustré aux figures 2-5 un interrupteur 5 est tel qu'il réalise sélectivement un court-circuit entre au moins deux spires 4 de l'antenne 3. Un tel interrupteur 5 est nommé interrupteur « court-circuit » ou « shunt » dans la présente. Pour cela il comprend typiquement un moyen de contact sélectivement conducteur électrique. Un tel interrupteur 5 peut prendre deux configurations : dans une configuration ouverte le moyen de contact est inopérant et les spires 4 sont toutes isolées l'une de l'autre, dans une configuration fermée le moyen de contact est opérant et met en contact électrique au moins deux spires 4, créant ainsi un court-circuit. Le moyen de contact peut relier deux spires ou plus jusqu'à la totalité des spires 4 rencontrées dans une section de l'antenne 3. Un tel interrupteur 5 peut être placé en tout point de l'antenne 3. Avantageusement, afin de créer le plus grand désaccord, il est placé de manière à ce que l'antenne 3 court-circuitée, telle que vue du microcircuit, soit la plus courte possible.

Un tel interrupteur « court-circuit » 5 est commandé pour passer de la configuration ouverte à la configuration fermée, par différents moyens d'action : un moyen de rappel ou retour automatique 7, une manoeuvre manuelle 8 ou encore la lumière 9.

Dans la figure 2, l'interrupteur 5 est normalement fermé, tel qu'indiqué par un moyen de rappel 7 tendant à le rappeler en position fermée. Il convient de noter que ce moyen de rappel 7 est indicatif du fonctionnement et qu'un moyen de rappel élastique n'est pas nécessairement présent. L'interrupteur 5 comprend une manoeuvre manuelle 8 qui permet lorsqu'elle est actionnée de passer en configuration ouverte. Une telle manoeuvre manuelle 8 figure tout principe mécanique ou sensible à la pression et apte à détecter un changement d'état entre un appui et une absence d'appui et réciproquement.

Ainsi un interrupteur 5 « court-circuit » selon la figure 2 permet de protéger un système électronique 1 contre le piratage redouté. Lorsque le système électronique 1 est laissé seul, l'interrupteur 5 est fermé, l'antenne 3 est alors désaccordée, et le système électronique 1 est inhibé en ce qu'il ne peut communiquer avec un lecteur, par exemple pirate. Lorsque le propriétaire du système électronique souhaite l'utiliser, il convient, pendant la transaction, qu'il autorise cette utilisation. Pour cela le propriétaire doit manoeuvrer le moyen de manoeuvre 8 afin d'ouvrir l'interrupteur 5. L'antenne 3 revient alors à son état nominal, accordée, et le système électronique 1 peut fonctionner et réaliser une transaction.

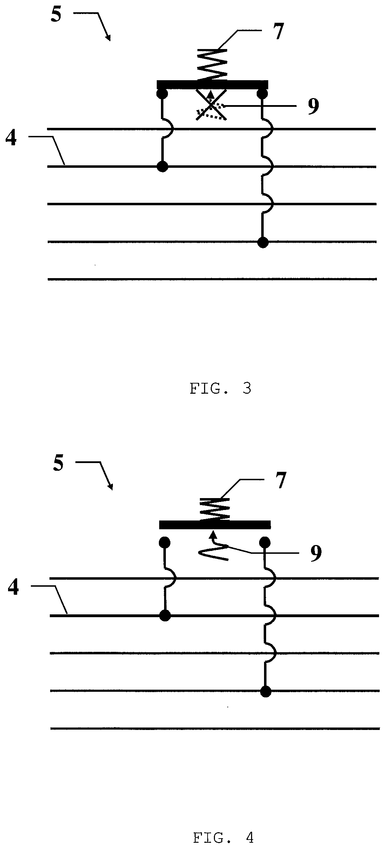

Un interrupteur « court-circuit » 5 peut encore être photosensible en ce qu'il est commandé et peut changer de configuration entre ouvert et fermé en fonction de son exposition ou non à la lumière 9. Selon un exemple utile à la compréhension de l'invention, illustré aux figures 3 et 4, un interrupteur 5 est ouvert lorsque éclairé et au contraire est fermé lorsque non éclairé. Ici, tel que montré à la figure 3, l'interrupteur est fermé par défaut lorsque non éclairé, tel qu'indiqué par le moyen de rappel 7 et l'absence de lumière 9. Aussi lorsque le système électronique 1 est placé dans le noir, ou que l'interrupteur 5 est masqué et ne reçoit pas la lumière 9, l'antenne 3 est désaccordée et le système électronique 1 est inhibé et ainsi protégé contre le piratage. Ceci protège un système électronique 1 dans les cas d'utilisation où il est invisible. Afin de pouvoir autoriser son utilisation, le propriétaire doit réaliser une action volontaire, qui ici consiste à exposer au moins l'interrupteur 5 à un éclairage 9, tel la lumière du jour, un éclairage ambiant ou encore un éclairage volontaire, par exemple au moyen d'une lampe torche, afin que l'interrupteur 5 passe en configuration ouverte, telle qu'illustrée à la figure 4.

Dans cette logique de fonctionnement, la lumière 9 autorise le fonctionnement du système électronique 1, protégeant contre le piratage un système électronique 1 dès qu'il reste dans l'obscurité.

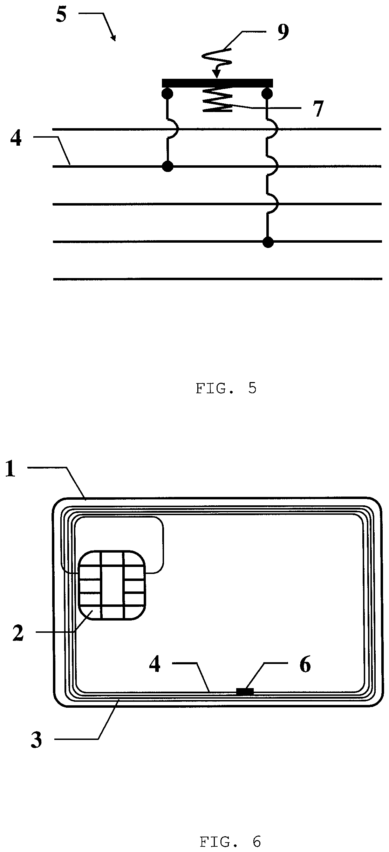

Selon un exemple utile à la compréhension de l'invention, un interrupteur 5 « court-circuit » photosensible peut encore être mis en oeuvre selon une logique inverse. Tel que montré à la figure 5, l'interrupteur 5 est ouvert par défaut lorsque non éclairé, tel qu'indiqué par le moyen de rappel 7. Aussi lorsque le système électronique 1 est placé en pleine lumière et que l'interrupteur 5 reçoit la lumière 9, l'antenne 3 est désaccordée et le système électronique 1 est inhibé et ainsi protégé contre le piratage. Ceci protège un système électronique 1 dans les cas d'utilisation où il est visible : porte badge, vitrine, véhicule automobile, derrière une vitre, etc. Afin de pouvoir autoriser son utilisation, le propriétaire doit réaliser une action volontaire afin que l'interrupteur 5 ne soit plus exposé à un éclairage. Ceci peut être réalisé par suppression de l'éclairage 9 ou encore par masquage de l'interrupteur 5 afin que la lumière ne puisse pas l'atteindre. Ainsi l'interrupteur 5 passe en configuration ouverte, et autorise le fonctionnement du système électronique 1.

Dans cette logique de fonctionnement, la lumière 9 interdit le fonctionnement du système électronique 1, protégeant contre le piratage un système électronique 1 dès qu'il est soumis à un éclairage.

Selon un autre exemple utile à la compréhension de l'invention, illustré à la figure 6, un autre moyen de réaliser une inhibition est un interrupteur 6 agissant sur l'antenne 3 en ce qu'il réalise sélectivement une ouverture ou une fermeture dans une spire 4 de l'antenne 3. Un tel interrupteur 6 est disposé en série en lieu et place d'une portion d'une spire 4. Ainsi lorsque l'interrupteur 6 est ouvert, le circuit d'antenne 3 est ouvert. Il n'est alors plus possible, au travers de ladite antenne 3, d'établir une liaison. Le système électronique 1 est alors incapable de dialoguer avec l'extérieur et se trouve de fait inhibé. Au contraire lorsque l'interrupteur est fermé, l'antenne 3 retrouve son état nominal bouclé et est apte à assurer ses fonctions et à permettre d'établir une liaison.

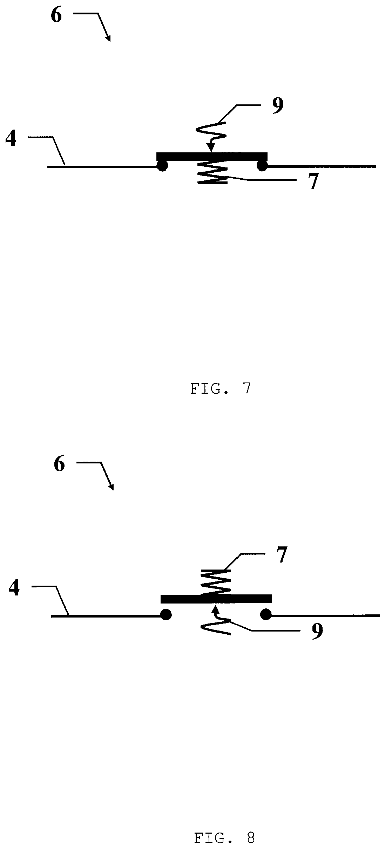

Tel qu'illustré aux figures 7-8 un interrupteur 6 est tel qu'il réalise sélectivement une ouverture ou une fermeture d'une spire 4 de l'antenne 3. Un tel interrupteur 6 est nommé interrupteur « série» dans la présente. Pour cela il comprend typiquement un moyen de contact sélectivement conducteur électrique. Un tel interrupteur 6 peut prendre deux configurations : dans une configuration ouverte le moyen de contact est inopérant et la spire 4 est ouverte, dans une configuration fermée le moyen de contact est opérant et ferme électriquement la spire 4. Un tel interrupteur « série » 6 peut être placé en tout point de l'antenne 3.

Un tel interrupteur « série » 6 est commandé pour passer de la configuration ouverte à la configuration fermée, par différents moyens d'action : un moyen de rappel ou retour automatique 7, une manoeuvre manuelle 8 ou encore la lumière 9.

Selon un exemple utile à la compréhension de l'invention non représenté, l'interrupteur 6 est normalement ouvert, un moyen de rappel 7 tendant à le ramener en position ouverte. L'interrupteur 5 comprend une manoeuvre manuelle 8 qui permet lorsqu'elle est actionnée de passer en configuration fermée.

Ainsi un tel interrupteur 6 « série » permet de protéger un système électronique 1 contre le piratage redouté. Lorsque le système électronique 1 est laissé seul, l'interrupteur 6 est ouvert, l'antenne 3 est alors inopérante, et le système électronique 1 est inhibé. Lorsque le propriétaire du système électronique souhaite l'utiliser, il convient, pendant la transaction, qu'il autorise cette utilisation. Pour cela le propriétaire doit manoeuvrer le moyen de manoeuvre 8 afin de fermer l'interrupteur 5. L'antenne 3 revient alors à son état nominal, bouclée et le système électronique 1 peut fonctionner et réaliser une transaction.

Un interrupteur « série » 6 peut encore être photosensible en ce qu'il est commandé et peut changer de configuration entre ouvert et fermé en fonction de son exposition ou non à la lumière 9. Selon un exemple utile à la compréhension de l'invention, illustré à la figure 7, un interrupteur 6 est fermé lorsque éclairé et au contraire est ouvert lorsque non éclairé. Ici, tel que montré à la figure 7, l'interrupteur est ouvert par défaut lorsque non éclairé. Aussi lorsque le système électronique 1 est placé dans le noir, ou que l'interrupteur 6 est masqué et ne reçoit pas la lumière 9, l'antenne 3 est coupée et le système électronique 1 est inhibé et ainsi protégé contre le piratage. Ceci protège un système électronique 1 dans les cas d'utilisation où il est invisible. Afin de pouvoir autoriser son utilisation, le propriétaire doit réaliser une action volontaire afin d'exposer l'interrupteur 6 à un éclairage 9, tel la lumière du jour, un éclairage ambiant ou encore un éclairage volontaire, par exemple au moyen d'une lampe torche, afin que l'interrupteur 6 passe en configuration fermée.

Dans cette logique de fonctionnement, la lumière 9 autorise le fonctionnement du système électronique 1, protégeant contre le piratage un système électronique 1 dès qu'il reste dans l'obscurité.

Selon un exemple utile à la compréhension de l'invention, un interrupteur 6 « série » photosensible peut encore être mis en oeuvre selon une logique inverse. Tel que montré à la figure 8, l'interrupteur 6 est fermé par défaut lorsque non éclairé. Aussi lorsque le système électronique 1 est placé en pleine lumière et que l'interrupteur 6 reçoit la lumière 9, l'antenne 3 est coupée et le système électronique 1 est inhibé et ainsi protégé contre le piratage. Ceci protège un système électronique 1 dans les cas d'utilisation où il est visible : porte badge, vitrine, véhicule automobile, derrière une vitre, etc. Afin de pouvoir autoriser son utilisation, le propriétaire doit réaliser une action volontaire afin que l'interrupteur 6 ne soit plus exposé à un éclairage. Ceci peut être réalisé par suppression de l'éclairage ou encore par masquage de l'interrupteur 6 afin que la lumière ne puisse pas l'atteindre. Ainsi l'interrupteur 6 passe en configuration fermée, boucle l'antenne 3 et autorise le fonctionnement du système électronique 1.

Dans cette logique de fonctionnement, la lumière 9 interdit le fonctionnement du système électronique 1, protégeant contre le piratage un système électronique 1 dès qu'il est soumis à un éclairage.

Pour qu'un interrupteur photosensible puisse fonctionner il convient que les rayons lumineux 9 soient en mesure d'atteindre ledit interrupteur 5, 6 et plus particulièrement son élément photosensible. Aussi, au droit de l'interrupteur, le système électronique 1 doit être dégagé. Un chemin exempt de matière ou ne comprenant que des matériaux translucides doit exister entre l'élément photosensible et l'extérieur.

Selon les figures 1, 6, 9 et 11, l'antenne 3 et le ou les interrupteurs 5, 6, 10, 11 sont disposés sur une couche périphérique de la carte à microcircuit 1 ou encore uniquement sous une ou plusieurs couches translucides.

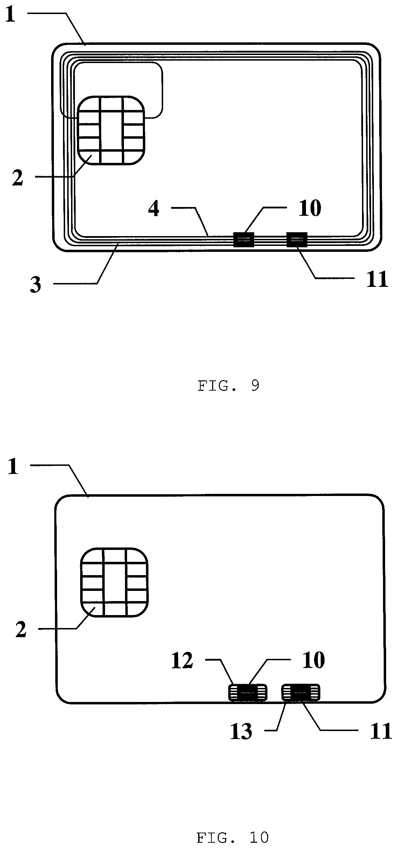

Selon un mode de réalisation alternatif, illustré à la figure 10, l'antenne 3 est dans sa plus grande partie recouverte par au moins une couche opaque. Cependant, au droit de chacun des éléments photosensibles des interrupteurs 10, 11, cette couche opaque comprend une épargne vide ou comprenant un matériau translucide, afin de former une fenêtre 12, 13, laissant passer la lumière.

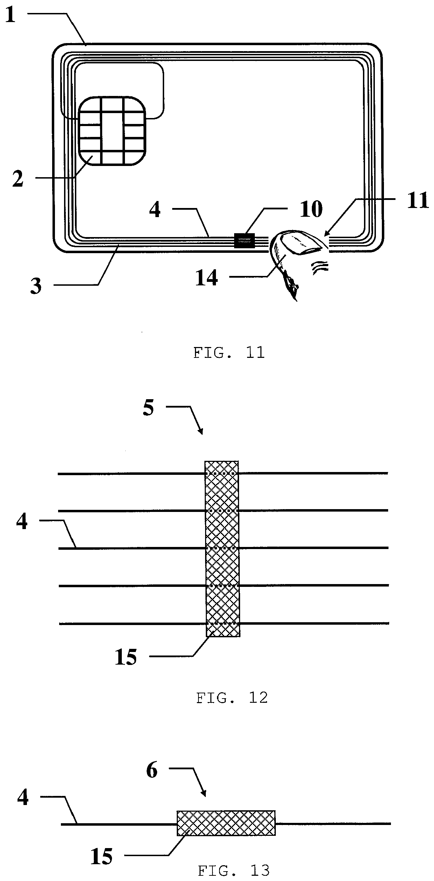

Tel que décrit précédemment en relation avec la figure 5, où tel qu'illustré à la figure 11, un interrupteur 5, 6, 10, 11 peut être commandé dans une configuration en supprimant son exposition à la lumière, par masquage. N'importe quel moyen ou outillage de masquage peut être utilisé à cette fin. Si l'élément photosensible d'un interrupteur 5, 6, 10, 11 présente une taille suffisamment réduite pour pouvoir être couvert par un moyen de masquage, sensiblement de la taille d'un doigt 14, un doigt 14, peut être utilisé. Un doigt 14 est avantageux en ce qu'il est toujours à disposition, sans nécessiter un outillage additionnel spécifique.

Un tel moyen de masquage ou un doigt 14 empêche que l'élément photosensible d'un interrupteur soit éclairé et permet ainsi d'obtenir la configuration de l'interrupteur lorsque non éclairé, y compris en pleine lumière.

Un tel interrupteur 5, 6, 10, 11 est ainsi simplement commandé en plaçant ou en retirant le dit moyen de masquage ou doigt 14 de devant l'élément sensible de l'interrupteur.

Dans le cas où un tel interrupteur doive être masqué, afin de trouver rapidement et simplement la position où doit être placé le moyen de masquage/doigt 14, la position de l'interrupteur et plus particulièrement de son élément sensible, est avantageusement signalée. Ce signalement est avantageusement disposé sur la surface externe du système électronique 1. Il peut consister en un repérage visuel, tel un marquage ou encore en un repérage tactile par modification de la forme ou de la texture de la surface. Un tel moyen permet d'indiquer où doit être réalisée la manoeuvre, dans le cas d'un interrupteur sensible à l'appui, ou le placement d'un moyen de masquage, dans le cas d'un interrupteur photosensible.

Il a été vu jusqu'à présent différents exemples utiles à la compréhension de l'invention d'un interrupteur, permettant de protéger un système électronique 1, contre différents scénarios de piratage, parfois contradictoires, tel que par exemple protection dans la lumière et protection dans l'obscurité. Afin de combiner ces différentes protections, de redonder la sécurité ou d'améliorer la protection par un double effet, il est avantageux de protéger un système électronique 1 au moyen d'au moins deux interrupteurs 10,11, tel qu'illustré à la figure 9.

Pour le choix de chacun de ces deux interrupteurs 10, 11, tous exemples utiles à la compréhension de l'invention précédemment décrits sont possibles et toutes les combinaisons de ces exemples utiles à la compréhension de l'invention sont possibles. Ainsi les deux interrupteurs 10, 11 peuvent être tous deux de type « série » ou tous deux de type « court-circuit » ou encore un de chaque type. Chacun des deux interrupteurs 10, 11 peut encore indépendamment comprendre une commande manuelle 8 ou être photosensible et être commandé par la lumière 9. Chacun des deux interrupteurs 10, 11 peut encore indépendamment être inhibant lorsque éclairé ou lorsque non éclairé.

Ainsi les deux interrupteurs 10, 11 peuvent être identiques afin de redonder une sécurité. Ainsi les deux interrupteurs 10, 11 peuvent être, par exemple, tous deux « court-circuit » à commande manuelle ou encore photosensibles et inhibiteurs lorsque non éclairés ou non manoeuvrés. Un tel arrangement crée ainsi deux moyens d'inhibition redondants et nécessite alors une double action volontaire simultanée du propriétaire sur chacun de deux interrupteurs 10, 11, afin d'autoriser une transaction.

Cependant un mode de réalisation à deux interrupteurs 10, 11 devient particulièrement avantageux lorsque, relativement à la lumière 9, les deux interrupteurs fonctionnent selon une logique inverse.

La logique inverse s'entend ici entre la logique d'autorisation/inhibition de fonctionnement du système électronique 1 et le comportement de chaque interrupteur au regard de l'éclairement 9. Ainsi si le premier interrupteur 10 inhibe le fonctionnement du système électronique 1 lorsque le premier interrupteur 10 est éclairé, le deuxième interrupteur 11 présente une logique inverse si le deuxième interrupteur 11 inhibe le fonctionnement du système électronique lorsque le deuxième interrupteur 11 n'est pas éclairé. Réciproquement si le premier interrupteur 10 inhibe le fonctionnement du système électronique 1 lorsque le premier interrupteur 10 n'est pas éclairé, alors le deuxième interrupteur 11 présente une logique inverse si le deuxième interrupteur 11 inhibe le fonctionnement du système électronique 1 lorsque le deuxième interrupteur est éclairé.

Une telle complémentarité des logiques, permet avantageusement de combiner les protections apportées par chacun des deux interrupteurs 10, 11. Ainsi lorsque le système électronique 1 est invisible/dans l'ombre celui des deux interrupteurs 10, 11 qui inhibe lorsqu'il n'est pas éclairé empêche le piratage. Au contraire lorsque le système électronique 1 est exposé à la lumière 9, l'autre interrupteur 10, 11, celui qui inhibe lorsqu'il est éclairé empêche le piratage. Ainsi le système électronique est protégé dans toutes les configurations d'éclairement. Le système électronique 1 peut être laissé en toute sécurité tant invisible dans une poche, une boite à gants, que visible dans un porte badge ou derrière un pare-brise. Lorsque le propriétaire souhaite réaliser une transaction, il convient d'une part de placer le système électronique 1 à la lumière 9 afin d'éclairer l'interrupteur 10, 11 qui inhibe lorsqu'il n'est pas éclairé, et donc autorise lorsqu'il est éclairé, et de masquer, par exemple avec un doigt 14, l'autre interrupteur 10, 11 afin qu'il autorise puisque le masquage entraîne qu'il n'est pas éclairé.

Différents modes de réalisation sont possibles afin d'obtenir deux interrupteurs 10, 11 présentant des logiques inverses. En effet il est possible, dans une chaine de mesure, entre un élément sensible d'un interrupteur et le résultat, parmi autorise ou inhibe, d'inverser la logique à plusieurs niveaux de la chaine de mesure/traitement.

Un premier niveau d'inversion apparait au niveau de l'élément sensible. Selon la technologique employée, l'élément peut être passant/conducteur ou non en fonction de la commande appui 8 ou lumière 9.

Un deuxième niveau d'inversion peut exister entre l'élément sensible et l'élément de contact assurant la fermeture du contact, en ce qu'il est possible d'insérer un moyen inverseur. Ce niveau d'inversion, en ce qu'il nécessite l'ajout d'un composant est cependant à éviter.

Un troisième niveau d'inversion est encore présent au niveau du type de disposition parmi « série » ou « court-circuit ». En effet il convient de noter ici, que toutes choses étant égales par ailleurs, un interrupteur « série » présente une logique inverse d'un interrupteur « court-circuit ».

Les schémas 14-17 figurent des couples possibles de premier interrupteur 10 et de deuxième interrupteur 11 présentant des logiques inverses. Sur ces figures les moyens de rappel 7 ont été supprimé afin d'alléger les figures. Dans tous les cas le premier interrupteur 10, disposé à gauche, assure l'inhibition par défaut de lumière, tandis que le deuxième interrupteur 11, disposé à droite, est au contraire inhibiteur en présence de lumière. Un système électronique 1 protégé par deux tels interrupteurs 10, 11 doit donc pour fonctionner, être placé à la lumière 9 afin que le premier interrupteur 10 autorise et un moyen de masquage 14 doit être utilisé sur le deuxième interrupteur 11 afin qu'il autorise aussi.

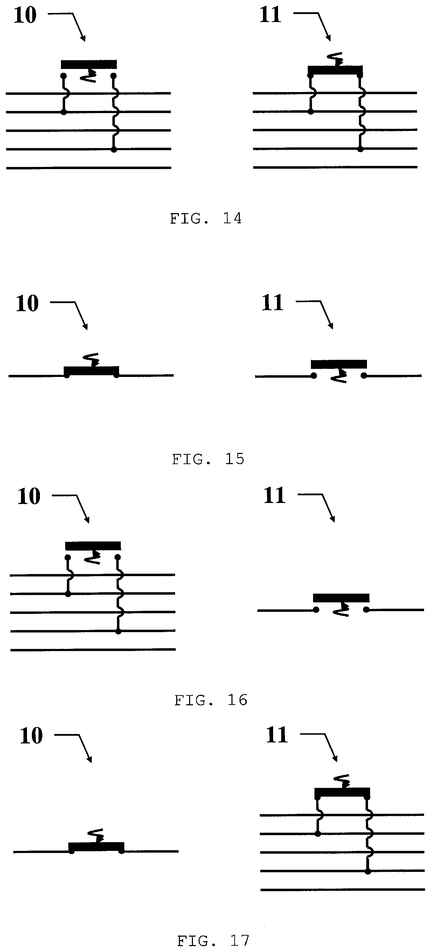

Le mode de réalisation de la figure 14 comprend deux interrupteurs « court-circuit » le premier 10, reprenant le mode de réalisation de la figure 4, inhibant dans le noir et le deuxième, reprenant le mode de réalisation de la figure 5, inhibant en présence de lumière 9. Les deux interrupteurs 10, 11 étant sensiblement identiques, l'inversion est typiquement obtenue en ajoutant un inverseur sur un des deux interrupteurs.

Le mode de réalisation de la figure 15 comprend deux interrupteurs « série » le premier 10, reprenant le mode de réalisation de la figure 7, inhibant dans le noir et le deuxième, reprenant le mode de réalisation de la figure 8, inhibant en présence de lumière 9. Les deux interrupteurs 10, 11 étant sensiblement identiques, l'inversion est typiquement obtenue en ajoutant un inverseur sur un des deux interrupteurs.

Le mode de réalisation de la figure 16 comprend un premier interrupteur « court-circuit » 10, reprenant le mode de réalisation de la figure 4, inhibant dans le noir et un deuxième interrupteur « série » 11, reprenant le mode de réalisation de la figure 8, inhibant en présence de lumière 9. Ici, l'inversion est avantageusement obtenue au moyen du changement de type.

Le mode de réalisation de la figure 17 comprend un premier interrupteur « série » 10, reprenant le mode de réalisation de la figure 7, inhibant dans le noir et un deuxième interrupteur « court-circuit » 11, reprenant le mode de réalisation de la figure 5, inhibant en présence de lumière 9. Ici, l'inversion est avantageusement obtenue au moyen du changement de type.

Les deux modes de réalisation des figures 16-17 sont avantageux en ce que l'inversion est naturellement obtenue par le changement de type entre « série » et « court-circuit ».

L'élément photosensible peut être réalisé par tout moyen apte à transformer une information de présence de lumière 9 en une information électrique : tension, courant, continuité, etc. On peut citer à titre d'exemple une photo diode qui est conductrice/passante lorsqu'éclairée. Une telle photodiode peut être utilisée directement pour réaliser les montages fermant un circuit lorsqu'éclairés, soit les modes de réalisation des figures 5 et 7.

Pour les autres montages, fermant un circuit lorsqu'éclairés, soit les modes de réalisation des figures 4 et 8, il convient d'utiliser un inverseur en plus de la photodiode.

Il en résulte dans ce cas que les combinaisons de la figure 14 et la figure 15 nécessitent un inverseur, et que la combinaison de la figure 16 nécessite deux inverseurs. Au contraire la combinaison particulièrement avantageuse de la figure 17 ne nécessite aucun inverseur, l'inversion entre le premier interrupteur 10 et le deuxième interrupteur 11, étant obtenue par le changement de type entre « série » et « court-circuit ».

Selon un mode de réalisation avantageux, particulièrement pour un système électronique 1 de petite taille, et surtout de faible épaisseur, tel une carte à microcircuit, l'élément sensible est avantageusement un matériau photo conducteur organique, pour le premier interrupteur 10 et/ou pour le deuxième interrupteur 11. Un tel matériau se présente encore avantageusement sous forme d'un matériau pouvant être déposé en couche mince, tel un vernis, une peinture ou une encre photo conductrice. Un tel matériau est apte à être déposé par tout moyen : impression, offset, jet d'encre, sérigraphie, etc.

En référence aux figures 12-13 va maintenant être décrit un mode de réalisation utilisant avantageusement un tel matériau organique photoconducteur.

On suppose que le matériau est conducteur lorsque éclairé, un tel matériau étant aujourd'hui disponible. Cependant, il est possible à l'avenir que la propriété inverse, soit un matériau organique conducteur dans l'obscurité et devenant isolant à la lumière, devienne aussi disponible.

La figure 12 illustre un interrupteur « court-circuit ». Une bande de matériau photo conducteur 15 est déposée en travers des spires 4 de manière à relier au moins deux d'entre elles. Les spires 4 ne sont pas modifiées autrement. Une telle réalisation produit un interrupteur conforme au mode de réalisation de la figure 5. Lorsque éclairé le matériau 15 conduit et réalise un court-circuit entre les spires 4 qui désaccorde l'antenne 3 et inhibe le système électronique 1. Au contraire, dans le noir, ou lorsque masqué, le matériau 15 est non conducteur et l'antenne 3 est fonctionnelle.

La figure 13 illustre un interrupteur « série ». Une bande de matériau photo conducteur 15 est déposée en lieu et place d'un segment d'une spire 4, préalablement retiré. Une telle réalisation produit un interrupteur conforme au mode de réalisation de la figure 7. Lorsque éclairé le matériau 15 conduit et ferme le circuit entre les deux portions de spire 4 afin de rendre l'antenne 3 fonctionnelle. Au contraire, dans le noir, ou lorsque masqué, le matériau 15 est non conducteur et la spire 4 est ouverte/coupée et le système électronique 1 est ainsi inhibé.

Un procédé de réalisation d'un dispositif de protection selon l'un des modes de réalisation précédemment décrit comprend les étapes suivantes. Un support est réalisé de manière classique avec son antenne. L'antenne est laissé libre en ce qu'elle n'est pas recouverte d'isolant électrique, ou ledit isolant est retiré aux interfaces avec lesdits interrupteurs, de manière à permettre un contact direct avec l'un ou l'autre des interrupteurs. Selon les modes de réalisation ladite antenne peut être modifiée : ainsi une coupure de piste peut être réalisée pour mettre en place d'un interrupteur « série ». Les interrupteurs sont mis en place en relation avec l'antenne. Dans le cas d'une réalisation au moyen d'un matériau photoconducteur organique, ce dernier est déposé entre les deux extrémités de la coupure d'une piste pour un interrupteur « série » ou en travers des pistes à court-circuiter pour un interrupteur « court-circuit ». Ensuite l'ensemble est protégé par recouvrement par au moins une couche de protection. Dans le cas où l'un au moins des interrupteurs est photosensible, la couche de protection est avantageusement translucide au moins sur une fenêtre ménagée au droit dudit interrupteur.

L'invention concerne encore un lecteur/transmetteur, du type apte à communiquer avec un système électronique 1 tel que précédemment décrit. Selon une caractéristique avantageuse, un tel lecteur/transmetteur peut comprendre au moins un moyen d'éclairage associé à chaque interrupteur photosensible du système électronique 1 nécessitant un éclairage pour autoriser le fonctionnement. Ainsi le système électronique 1 est tel que sa mise en place dans le lecteur/transmetteur garantisse un éclairage du ou des interrupteurs photosensibles devant être éclairés pour autoriser le fonctionnement. Un tel arrangement permet avantageusement d'autoriser le fonctionnement du système électronique 1, y compris en l'absence de lumière ambiante, tel que la nuit.

Selon une autre caractéristique avantageuse alternative ou complémentaire, un tel lecteur/transmetteur peut comprendre au moins un moyen de masquage associé à chaque interrupteur photosensible du système électronique 1 nécessitant un masquage pour autoriser le fonctionnement. Ainsi le système électronique 1 est tel que sa mise en place dans le lecteur/transmetteur garantisse un masquage du ou des interrupteurs photosensibles devant être masqués pour autoriser le fonctionnement. Un tel arrangement permet avantageusement d'autoriser le fonctionnement du système électronique 1, sans nécessiter l'utilisation d'un moyen de masquage ou d'un doigt 14.

En fonction des positions et des types d'interrupteurs présents sur le système électronique 1, un lecteur/transmetteur comprend avantageusement éclairage(s) et masquage(s) complémentaires, afin que la seule mise en place dans le lecteur/transmetteur place lesdits interrupteurs dans leur configuration autorisant le fonctionnement.

## Revendications

1. Dispositif de protection d'un système électronique (1) comprenant une antenne (3), comportant au moins deux spires, contre une utilisation non autorisée, le dispositif comprenant un premier interrupteur (10) photosensible apte à inhiber le fonctionnement du système électronique (1), le premier interrupteur (10) étant disposé en court-circuit (5) entre au moins deux spires (4) de l'antenne (3) ou en série dans l'une desdites spires de ladite antenne, et au moins un deuxième interrupteur (11) photosensible apte à inhiber le fonctionnement du système électronique (1), ***caractérisé en ce que*** le deuxième interrupteur (11) fonctionne selon une logique inverse du premier interrupteur (10), relativement à l'éclairage.

2. Dispositif selon la revendication 1, où le premier interrupteur (10) est ouvert lorsque éclairé.

3. Dispositif selon la revendication 1, où le premier interrupteur (10) est ouvert lorsque non éclairé.

4. Dispositif selon l'une quelconque des revendications 1 à 3, où l'élément photosensible du premier interrupteur (10) présente une taille suffisamment réduite pour pouvoir être couvert par un moyen de masquage (14), sensiblement de la taille d'un doigt.

5. Dispositif selon l'une quelconque des revendications 1 à 4, où le deuxième interrupteur (11) est apte à inhiber le fonctionnement du système électronique (1) lorsque le deuxième interrupteur (11) n'est pas éclairé.

6. Dispositif selon l'une quelconque des revendications 1 à 5, où le deuxième interrupteur (11) est apte à inhiber le fonctionnement du système électronique (1) lorsque le deuxième interrupteur (11) est éclairé.

7. Dispositif selon l'une quelconque des revendications 1 à 6, où l'élément photosensible du deuxième interrupteur (11) présente une taille suffisamment réduite pour pouvoir être couvert par un moyen de masquage (14), sensiblement de la taille d'un doigt.

8. Dispositif selon l'une quelconque des revendications 1 à 7, où le deuxième interrupteur (11) est disposé en court-circuit entre au moins deux spires (4) de l'antenne (3).

9. Dispositif selon l'une quelconque des revendications 1 à 7, où le deuxième interrupteur (11) est disposé en série dans une spire (4) de l'antenne (3).

10. Dispositif selon l'une quelconque des revendications 1 à 9, où l'élément sensible du premier interrupteur (10) et/ou l'élément sensible du deuxième interrupteur (11) comprend un matériau photo conducteur organique (15).

11. Dispositif selon l'une quelconque des revendications 1 à 10, où l'élément sensible du premier interrupteur (10) et/ou l'élément sensible du deuxième interrupteur (11) est recouvert d'une fenêtre translucide.

12. Système électronique (1) comprenant une antenne (3) ***caractérisé en ce qu'il*** comprend un dispositif de protection selon l'une quelconque des revendications 1 à 11.

13. Système électronique (1) selon la revendication 12 où le système électronique (1) est une carte à microcircuit.

14. Procédé de fabrication d'un dispositif selon l'une quelconque des revendications 1 à 11, ***caractérisé en ce qu'il*** comprend les étapes suivantes :
- réalisation d'un support comprenant une antenne,
- dépôt d'un matériau photoconducteur organique au contact de l'antenne,
- recouvrement par au moins une couche de protection comprenant une fenêtre translucide au moins au droit du matériau photoconducteur organique.

15. Utilisation d'un lecteur/transmetteur pour communiquer avec un système électronique (1) selon l'une quelconque des revendications 12 à 13, ledit lecteur comprenant au moins un moyen d'éclairage et/ou au moins un moyen de masquage, apte à coopérer avec le dispositif de protection.

16. Système comportant un système électronique selon l'une quelconque des revendications 12 à 13, et comportant un lecteur/transmetteur, du type apte à communiquer avec un système électronique (1) selon l'une quelconque des revendications 12 à 13, **caractérisé en ce que** ledit lecteur comprend au moins un moyen d'éclairage et/ou au moins un moyen de masquage, apte à coopérer avec le dispositif de protection.

## Patentansprüche

1. Vorrichtung zum Schutz eines elektronischen Systems (1) mit einer Antenne (3), die wenigstens zwei Windungen umfasst, gegen eine unbefugte Verwendung, wobei die Vorrichtung einen ersten lichtempfindlichen Schalter (10), der geeignet ist, den Betrieb des elektronischen Systems (1) zu verhindern, wobei der erste Schalter (10) zwischen wenigstens zwei Windungen (4) der Antenne (3) kurzgeschlossen (5) oder in einer der Windungen der Antenne in Reihe geschaltet ist, sowie wenigstens einen zweiten lichtempfindlichen Schalter (11) umfasst, der geeignet ist, den Betrieb des elektronischen Systems (1) zu verhindern, **dadurch gekennzeichnet, dass** der zweite Schalter (11) bezüglich der Beleuchtung entsprechend einer umgekehrten Logik des ersten Schalters (10) funktioniert.

2. Vorrichtung nach Anspruch 1, bei der der erste Schalter (10) offen ist, wenn er beleuchtet wird.

3. Vorrichtung nach Anspruch 1, bei der der erste Schalter (10) offen ist, wenn er nicht beleuchtet wird.

4. Vorrichtung nach einem der Ansprüche 1 bis 3, bei der das lichtempfindliche Element des ersten Schalters (10) eine Größe aufweist, die klein genug ist, damit es durch ein im Wesentlichen fingergroßes Abdeckmittel (14) abgedeckt werden kann.

5. Vorrichtung nach einem der Ansprüche 1 bis 4, bei der der zweite Schalter (11) geeignet ist, den Betrieb des elektronischen Systems (1) zu verhindern, wenn der zweite Schalter (11) nicht beleuchtet wird.

6. Vorrichtung nach einem der Ansprüche 1 bis 5, bei der der zweite Schalter (11) geeignet ist, den Betrieb des elektronischen Systems (1) zu verhindern, wenn der zweite Schalter (11) beleuchtet wird.

7. Vorrichtung nach einem der Ansprüche 1 bis 6, bei der das lichtempfindliche Element des zweiten Schalters (11) eine Größe aufweist, die klein genug ist, damit es durch ein im Wesentlichen fingergroßes Abdeckmittel (14) abgedeckt werden kann.

8. Vorrichtung nach einem der Ansprüche 1 bis 7, bei der der zweite Schalter (11) zwischen wenigstens zwei Windungen (4) der Antenne (3) kurzgeschlossen ist.

9. Vorrichtung nach einem der Ansprüche 1 bis 7, bei der der zweite Schalter (11) in einer Windung (4) der Antenne (3) in Reihe geschaltet ist.

10. Vorrichtung nach einem der Ansprüche 1 bis 9, bei der das empfindliche Element des ersten Schalters (10) und/oder das empfindliche Element des zweiten Schalters (11) ein organisches photoleitfähiges Material (15) umfasst.

11. Vorrichtung nach einem der Ansprüche 1 bis 10, bei der das empfindliche Element des ersten Schalters (10) und/oder das empfindliche Element des zweiten Schalters (11) mit einem lichtdurchlässigen Fenster abgedeckt ist.

12. Elektronisches System (1) mit einer Antenne (3), **dadurch gekennzeichnet, dass** es eine Schutzvorrichtung nach einem der Ansprüche 1 bis 11 umfasst.

13. Elektronisches System (1) nach Anspruch 12, bei dem das elektronische System (1) eine Mikrochipkarte ist.

14. Verfahren zur Herstellung einer Vorrichtung nach einem der Ansprüche 1 bis 11, **dadurch gekennzeichnet, dass** es die folgenden Schritte umfasst:
- Herstellen eines Trägers, der eine Antenne umfasst,
- Abscheiden eines organischen photoleitfähigen Materials in Kontakt mit der Antenne,
- Überziehen mit wenigstens einer Schutzschicht, die ein lichtdurchlässiges Fenster wenigstens im Bereich des organischen photoleitfähigen Materials aufweist.

15. Verwendung eines Lesegerätes/Senders, um mit einem elektronischen System (1) nach einem der Ansprüche 12 bis 13 zu kommunizieren, wobei das Lesegerät wenigstens ein Beleuchtungsmittel und/oder wenigstens ein Abdeckmittel umfasst, das geeignet ist, mit der Schutzvorrichtung zusammenzuwirken.

16. System, umfassend ein elektronisches System nach einem der Ansprüche 12 bis 13, und umfassend ein(en) Lesegerät/Sender vom Typ, der geeignet ist, mit einem elektronischen System (1) nach einem der Ansprüche 12 bis 13 zu kommunizieren, **dadurch gekennzeichnet, dass** das Lesegerät wenigstens ein Beleuchtungsmittel und/oder wenigstens ein Abdeckmittel umfasst, das geeignet ist, mit der Schutzvorrichtung zusammenzuwirken.

## Claims

1. A device for providing protection against non-authorized use of an electronic system (1) including an antenna (3), including at least two turns, the device comprising a first photosensitive switch (10) suitable for inhibiting the operation of the electronic system (1), the first switch (10) being arranged as a short-circuit (5) between at least two turns (4) of the antenna (3) or arranged in series in one of said turns of said antenna, and at least a second photosensitive switch (11) suitable for inhibiting the operation of the electronic system (1), **characterized in that** the second switch (11) operates with logic that is the inverse, relative to lighting, of the logic of the first switch (10).

2. The device according to claim 1, wherein the first switch (10) is open when it is illuminated.

3. The device according to claim 1, wherein the first switch (10) is open when it is not illuminated.

4. The device according to any one of claims 1 to 3, wherein the photosensitive element of the first switch (10) is of a size that is small enough to enable it to be covered by masking means (14) having substantially the size of a finger.

5. The device according to any one of claims 1 to 4, wherein the second switch (11) is suitable for inhibiting the operation of the electronic system (1) when the second switch (11) is not illuminated.

6. The device according to any one of claims 1 to 5, wherein the second switch (11) is suitable for inhibiting the operation of the electronic system (1) when the second switch (11) is illuminated.

7. The device according to any one of claims 1 to 6, wherein the photosensitive element of the second switch (11) is of a size that is small enough to enable it to be covered by masking means (14) having substantially the size of a finger.

8. The device according to any one of claims 1 to 7, wherein the second switch (11) is arranged as a short-circuit between at least two turns (4) of the antenna (3) .

9. The device according to any one of claims 1 to 7, wherein the second switch (11) is arranged in series in a turn (4) of the antenna (3).

10. The device according to any one of claims 1 to 9, wherein the sensitive element of the first switch (10) and/or the sensitive element of the second switch (11) comprises an organic photoconductive material (15).

11. The device according to any one of claims 1 to 10, wherein the sensitive element of the first switch (10) and/or the sensitive element of the second switch (11) is covered in a translucent window.

12. An electronic system (1) including an antenna (3) **characterized in that** the system includes a protection device according to any one of claims 1 to 11.

13. The electronic system (1) according to claim 12, wherein the electronic system (1) is a microcircuit card.

14. A method for manufacturing a device according to any one of claims 1 to 11, **characterized in that** the method comprises the following steps:
· making a support including an antenna;
· depositing an organic photoconductive material in contact with the antenna;
· covering with at least one protection layer including a translucent window at least in register with the organic photoconductive material.

15. A use of a reader/transmitter for communicating with an electronic system (1) according to any one of claims 12 to 13, said reader including at least one illumination means and/or at least one masking means, suitable for co-operating with the protection device.

16. A system comprising an electronic system according to any one of claims 12 to 13, and comprising a reader/transmitter, of type suitable for communicating with an electronic system (1) according to any one of claims 12 to 13, **characterized in that** said reader includes at least one illumination means and/or at least one masking means, suitable for co-operating with the protection device.
